# FASCICULE DE BREVET EUROPEEN

(11) **EP 2 466 361 B1**
(45) Date de publication et mention de la délivrance du brevet: **25.09.2013**
(21) Numéro de dépôt: 11193440.2
(22) Date de dépôt: 14.12.2011
(51) Int. Cl.: G02B 27/01, B60K 35/00, B61L 15/00, G09B 9/052

(54) **Dispositif d'affichage tête haute pour un véhicule ferroviaire**
Head-up-Anzeige für ein Schienenfahrzeug
Head-up display for a railway vehicle

(30) Priorité: 14.12.2010 FR 1060508
(43) Date de publication de la demande: 20.06.2012
(73) Titulaire: ALSTOM Transport Technologies SAS, 92300 Levallois-Perret (FR)
(72) Inventeur: Miglianico, Denis, 69160 Tassin (FR); Devillard, Olivier, 67360 Woerth (FR); Vukicevic, Dalibor, 67000 Strasbourg (FR); Kiefer, Renaud, 67540 Ostwald (FR); Fontaine, Joël, 67200 Strasbourg (FR)
(74) Mandataire: Blot, Philippe Robert Emile

(56) Documents cités:
- JP-A- 07 290 994
- JP-A- 2003 084 660
- US-A1- 2004 208 394
- US-B1- 7 312 766

## Description

La présente invention concerne un dispositif d'affichage tête haute pour un véhicule ferroviaire.

On connaît déjà dans l'état de la technique et par exemple de la publication JP 07 290 994 A, des dispositifs d'affichage tête haute, propres à afficher une image dans le champ de vision d'un conducteur de véhicule automobile ou d'un pilote de véhicule aérien. Un tel dispositif comporte des moyens d'affichage de l'image transitant par un écran transparent, dans une zone d'affichage prédéterminée. L'écran transparent est généralement indépendant du pare-brise, agencé au droit de celui-ci ou formé par le pare-brise du véhicule.

L'image affichée concerne des informations utiles au conducteur pour la conduite du véhicule, par exemple la vitesse de ce véhicule, un affichage de représentations de l'environnement du véhicule, ou tout type d'alarme visuelle en général. Ces informations sont affichées au niveau du pare-brise, afin d'éviter au conducteur d'avoir à quitter sa trajectoire des yeux lorsqu'il désire consulter ces informations. Habituellement, ces informations sont de type alphanumérique, ou sont présentées sous forme de pictogramme et/ou de graphique. Ces informations peuvent être statiques, ou dynamiques.

Un tel dispositif d'affichage est également appelé « dispositif d'affichage tête haute » ou HUD (acronyme anglais pour « Head Up Display »).

Ce dispositif d'affichage n'est généralement pas adapté à un véhicule ferroviaire. En effet, la problématique d'un dispositif d'affichage tête haute pour un véhicule automobile ou un véhicule aérien n'est pas la même que celle d'un véhicule ferroviaire. Dans les systèmes existants, la variation de la direction du regard peut varier dans un angle ne dépassant pas 25°. En revanche, dans le cas d'un véhicule ferroviaire, le conducteur peut être amené à se déplacer dans la cabine, ce qui fait que le champ de vision généré par un dispositif d'affichage tête haute pour véhicule ferroviaire doit être au moins trois fois plus étendu que ceux développés pour des véhicules automobiles ou aériens.

L'invention a notamment pour but de remédier à cet inconvénient en fournissant un dispositif d'affichage adapté à un véhicule ferroviaire.

A cet effet, l'invention a notamment pour objet un dispositif d'affichage tête haute selon la revendication 1,

On notera qu'on appelle « système opto électronique de suivi » tout système utilisant des moyens de détection optique, du type caméra, aussi bien dans le domaine du visible qu'en dehors du visible, notamment et non limitativement dans l'infra rouge, et que d'autres modes de détection qui ne seraient pas strictement "optiques" sont également inclus sous ce terme,par exemple des moyens de détection par thermographie.

Le fait de corréler les moyens de détection de la position du conducteur avec les moyens d'affichage permet de déplacer l'image affichée pour la conserver dans le champ de vision du conducteur, quelle que soit sa position dans la cabine de conduite du véhicule ferroviaire. Ainsi, le conducteur n'a pas à tourner la tête pour rechercher l'image lorsqu'il en a besoin.

Un dispositif d'affichage selon l'invention peut comporter en outre l'une ou plusieurs des caractéristiques suivantes, prises seules ou selon toutes les combinaisons techniquement possibles.
- Le système de suivi comporte au moins une caméra destinée à être agencée dans la cabine de façon à capturer en continu des images de cette cabine, et un dispositif de traitement d'image destiné à déduire la position du conducteur, notamment de sa tête, à partir des images capturées par chaque caméra.
- Les moyens d'affichage de l'image comportent un dispositif de projection de l'image sur l'écran, vers lequel le dispositif de projection projette des rayons lumineux, ces rayons lumineux étant au moins en partie réfléchis par l'écran vers le conducteur.
- L'écran est formé par un pare-brise de véhicule.
- Le dispositif de projection est propre à générer une image virtuelle au delà de l'écran par rapport au conducteur.
- Le dispositif de projection d'image comporte une source de lumière et un écran à cristaux liquides, agencés de sorte que la lumière émise par la source passe à travers l'écran à cristaux liquides, la zone d'affichage correspondant à un affichage de l'écran à cristaux liquides, retransmise par un système de projection optique sur l'écran d'affichage.
- Les moyens d'affichage modifient la position de l'image en effectuant une modification de position sur l'affichage de l'écran à cristaux liquides.
- Le dispositif de projection d'image comporte un projecteur laser et un écran holographique, agencés de sorte que les lasers émis par le projecteur passent à travers l'écran holographique.

L'invention concerne en outre un véhicule ferroviaire comportant une cabine de conduite comprenant un dispositif d'affichage tel que défini précédemment.

L'invention sera mieux comprise à la lecture de la description qui va suivre, donnée uniquement à titre d'exemple et faite en se référant aux figures annexées, parmi lesquelles :
- la figure 1 est une vue en coupe longitudinale d'une cabine de véhicule ferroviaire équipée d'un dispositif d'affichage selon un exemple de mode de réalisation de l'invention ;
- la figure 2 représente un pare-brise de la cabine de la figure 1, vu depuis l'extérieur de cette cabine ;
- la figure 3 est un schéma de principe du dispositif d'affichage équipant la cabine de la figure 1 ;
- les figures 4 et 5 représentent schématiquement les différents composants constituant le dispositif d'affichage de la figure 3, respectivement selon des premier et deuxième modes de réalisation de l'invention ;
- la figure 6 représente une optique de projection équipant le dispositif d'affichage de la figure 4 ou celui de la figure 5 ; et
- la figure 7 représente schématiquement des rayons lumineux interagissant avec un combineur du dispositif de la figure 1.

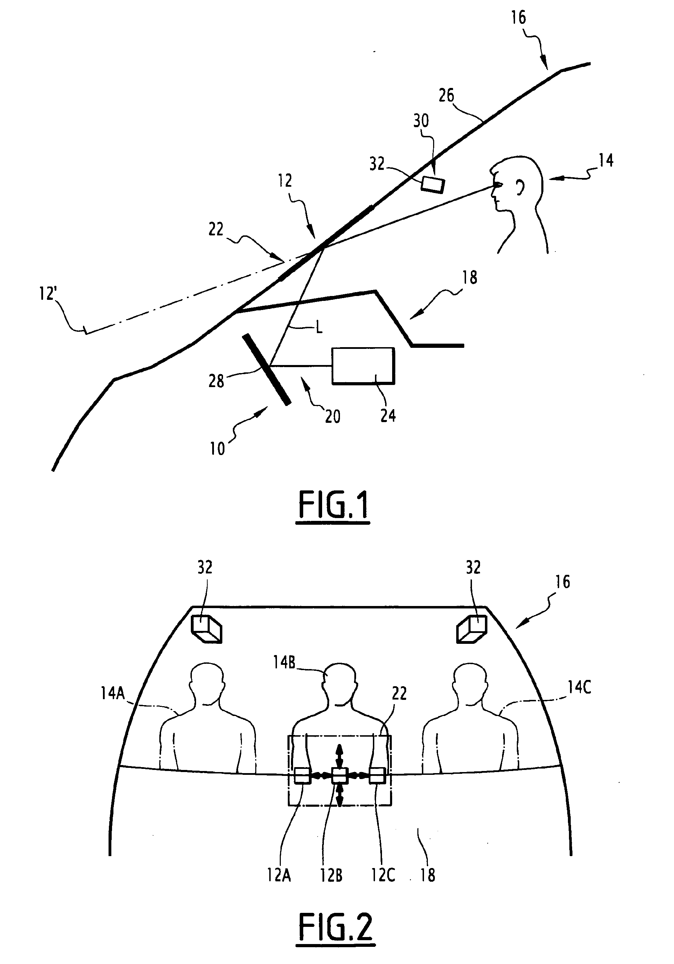

On a représenté sur la figure 1 un dispositif 10 d'affichage d'au moins une image 12 dans le champ de vision d'un conducteur 14. Ce dispositif d'affichage 10 équipe une cabine 16 de conduite d'un véhicule ferroviaire.

L'image 12 affichée concerne de manière classique des informations utiles au conducteur pour la conduite du véhicule, par exemple la vitesse de ce véhicule.

Afin d'éviter que le conducteur ne baisse la tête vers un panneau de bord 18 de la cabine 16 lors de la conduite, l'image 12 est affichée dans le champ de vision du conducteur 14, à l'aide de moyens 20 d'affichage de cette image dans une zone 22 d'affichage prédéterminée. La zone d'affichage 22 est par exemple prévue au milieu d'un pare-brise 26 de la cabine 16, comme cela est représenté sur la figure 2.

Les moyens d'affichage 20 comportent un dispositif 24 de projection de l'image et un combineur 26 vers lequel le dispositif de projection projette des rayons lumineux L, par exemple par l'intermédiaire d'un miroir 28. Ces rayons lumineux L sont au moins en partie réfléchis par le combineur 26 vers le conducteur 14, de façon à générer l'image 12 dans le champ de vision de ce conducteur 14.

On rappelle qu'un combineur est un écran propre à réfléchir certaines longueurs d'ondes tout en laissant passer d'autres longueurs d'ondes. Ainsi, un combineur permet un affichage semi-transparent, en autorisant l'affichage d'une image tout en laissant apparaître l'environnement situé au-delà de ce combineur par rapport à l'observateur.

Le combineur 26 est formé par le pare-brise 26 du véhicule ferroviaire. De préférence, le pare-brise 26 est classique, la réflexion optimale des rayons lumineux L vers le conducteur 14 étant réalisée par le choix d'un angle d'incidence de ces rayons L vers le pare-brise 16 et par une polarisation des rayons lumineux L adaptée à cet effet.

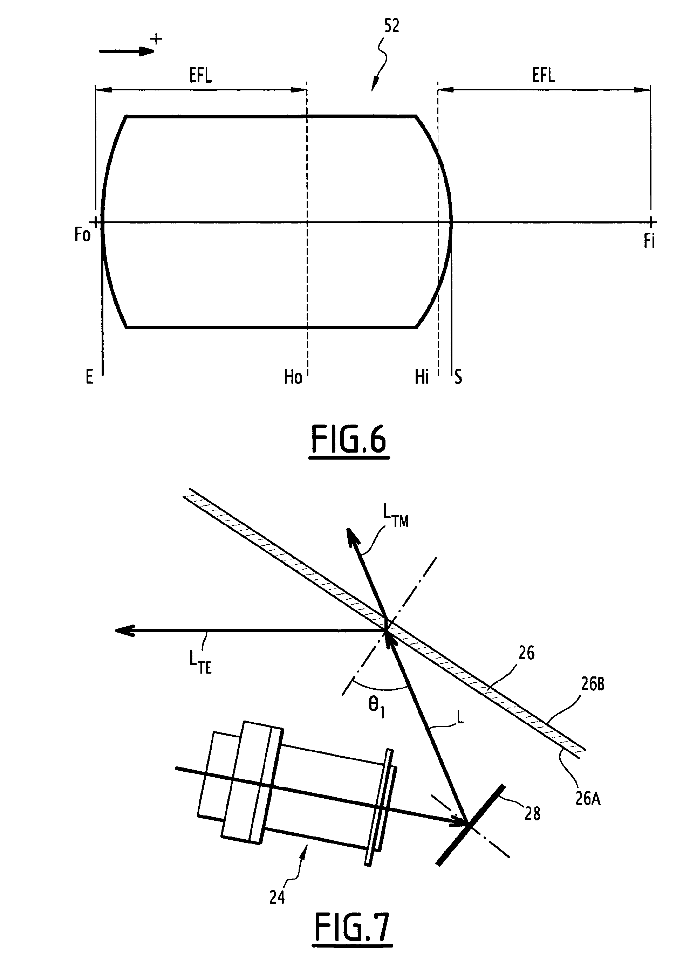

Ainsi, comme cela est représenté sur la figure 7, les rayons lumineux L sont projetés sur le combineur 26 selon un angle d'incidence θ₁ égal à l'angle de Brewster, calculé de façon connue en soi. Dans le cas où le combineur 26 est formé par un pare-brise classique, cet angle de Brewster est d'environ 57°.

Du fait de cette incidence à l'angle de Brewster, la composante *L_{TM}* polarisée Transverse Magnétique traverse sans réflexion les interfaces intérieure 26A et extérieure 26B du combineur 26. En revanche, la composante *L_{TE}* polarisée Transverse Electrique est entièrement réfléchie sur l'interface intérieure 26A. Ainsi, il n'existe aucune réflexion sur l'interface extérieure 26B, et on évite la génération d'une image parasite, ce qui permet d'améliorer la qualité de l'image 12.

Puisque la composante *L_{TM}* polarisée Transverse Magnétique des rayons n'est pas réfléchie vers le conducteur, elle n'intervient pas dans la formation de l'image 12. Les rayons L sont donc de préférence polarisés à une polarisation Transverse Electrique, c'est à dire perpendiculaire au plan d'incidence,

On notera que le dispositif de projection 24 est réglé de façon à générer une image virtuelle 12' au-delà du pare-brise 26 par rapport au conducteur 14. En d'autres termes, les rayons lumineux L sont réfléchis par le pare-brise 26, sur la zone d'affichage 22, de façon à faire apparaître une image virtuelle 12' au-delà du pare-brise, là où porte le regard du conducteur 14, afin qu'il n'ait pas à accommoder son oeil lorsqu'il regarde cette image virtuelle 12'.

Le dispositif d'affichage 10 selon l'invention comporte un système opto électronique de suivi 30, pour la détection de la position du conducteur 14 dans la cabine de conduite 16. Ce système de suivi 30 comporte au moins une caméra 32, par exemple deux caméras disposées à une extrémité supérieure du pare-brise 26, comme cela est représenté sur la figure 2. En effet, le dispositif 10 comporte autant de caméras nécessaire pour couvrir toute la cabine de conduite 16 à surveiller. Dans le cas où le dispositif 10 comporte plusieurs caméras, les images prises par ces caméras sont fusionnées de manière connue en soi.

Les caméras 32 sont des caméras classiques et/ou à infrarouge, afin de pouvoir détecter la position du conducteur, notamment de sa tête, de jour comme de nuit.

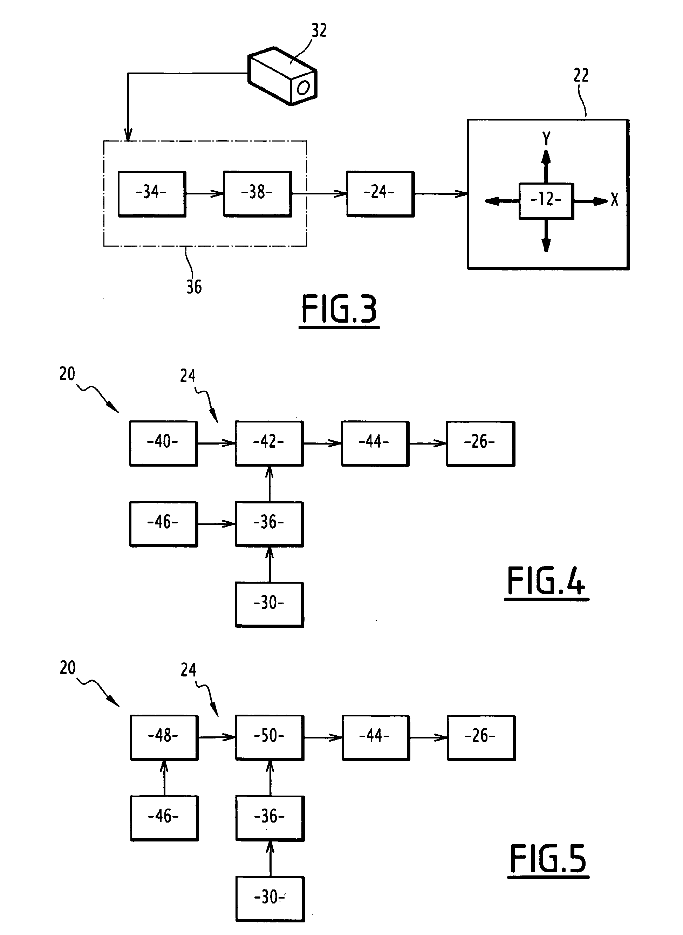

Ces caméras 32 sont agencées dans la cabine 16 de façon à capturer en continu des images de cette cabine 16, et sont reliées à un dispositif de traitement d'images 34 (représenté sur la figure 3) destiné à déduire la position du conducteur 14, notamment de sa tête, à partir des images capturées par les caméras 32.

Les moyens d'affichage 20 sont alors configurés pour modifier la position de l'affichage de l'image 12 dans la zone d'affichage 22 en fonction de la position du conducteur 14 dans la cabine 16. A cet effet, le dispositif d'affichage comporte des moyens de traitement informatique 36, comprenant le dispositif de traitement d'images 34, et comprenant des moyens 38 de modification de l'image 12, reliés au moyens 34 de traitement d'images, fournissant l'image à afficher au dispositif de projection 24.

On a par exemple représenté sur la figure 2 trois positions 14A, 14B, 14C du conducteur dans la cabine 16. A chacune de ces positions correspond une position respective de l'image 12A, 12B, 12C dans la zone d'affichage 22. Ainsi, lorsque le conducteur se déplace, par exemple depuis la position 14B vers la position 14A, les caméras 32 capturent l'image du conducteur se déplaçant, et les moyens d'affichage 20 modifient en temps réel la position de l'affichage de l'image depuis la position 12B vers la position 12A en fonction de la position du conducteur. En d'autres termes, l'affichage de l'image se déplace avec le conducteur, si bien que le conducteur garde l'image 12 affichée dans son champ de vision quelle que soit sa position dans la cabine 16.

La position de l'affichage de l'image 12 peut aussi être modifiée de la même manière en fonction de la hauteur de la tête du conducteur.

Ainsi, la position de l'image peut être modifiée par déplacement latéral et/ou par déplacement vertical, de préférence à la fois par déplacement latéral et vertical.

On notera que la position par défaut de l'image 12, au moment de l'initialisation ou en cas de défaillance, peut être une position prédéterminée, ou être la dernière position enregistrée.

On a représenté sur la figure 4 un exemple de moyens d'affichage 20 selon un premier mode de réalisation de l'invention.

Conformément à ce premier mode de réalisation, le dispositif de projection d'images 24 comporte une source de lumière 40, telle qu'une source à diodes électroluminescentes, et un écran à cristaux liquides 42 agencé en aval de la source de lumière 40, de sorte que la lumière émise par cette source 40 passe à travers l'écran à cristaux liquides 42. Cette lumière passe ensuite à travers un système de projection optique 44 qui dirige les rayons lumineux L vers le combineur 26 formé par le pare-brise.

Conformément à ce mode de réalisation, le dispositif de traitement informatique 36 génère les informations concernant l'image à afficher, et fournit ces informations à l'écran à cristaux liquide 42. Ainsi, la zone d'affichage 22 correspond à un affichage de l'écran à cristaux liquides 42, retransmise par le système de projection optique 44 sur le combineur 26.

L'image à afficher est générée à partir des informations reçues par le système de suivi 30, qui indiquent la position du conducteur 14 au dispositif de traitement informatique 36, et par un dispositif 46 de détection des paramètres d'environnement, connu en soit, fournissant les informations à afficher, telles que la vitesse du véhicule.

On notera que le déplacement de l'image 12 est réalisé sans déplacement mécanique des éléments constituant les moyens d'affichage 20. En effet, la modification de position est réalisée uniquement sur l'affichage de l'écran à cristaux liquides 42, puis retransmise par le système de projection optique 44. En d'autres termes, la modification de la position de l'image 12 est réalisée en activant des zones différentes de l'écran à cristaux liquides 42.

On a représenté sur la figure 5 des moyens d'affichage 20 selon un deuxième exemple de mode de réalisation de l'invention. Sur cette figure, les éléments analogues à ceux de la figure 4 sont désignés par des références identiques.

Conformément à ce deuxième mode de réalisation, le dispositif de projection d'images 24 comporte un projecteur laser 48 et un écran holographique 50, agencés de sorte que les lasers émis par le projecteur 48 passent à travers l'écran holographique 50, avant d'être redirigés par le système de projection optique 44 vers le combineur 26 formé par le pare-brise.

Conformément à ce mode de réalisation, le dispositif de détection des paramètres d'environnement 46 fournit les informations à afficher directement au projecteur laser 48, qui forme donc l'image à afficher.

En revanche, les informations concernant la position du conducteur dans la cabine 16 sont fournies à l'écran holographique 50, par les moyens de traitement informatiques 36, afin de permettre le déplacement de l'image 12 à afficher.

On notera que le dispositif de projection 20 selon le deuxième mode de réalisation permet plus facilement de diriger la puissance lumineuse et implique donc moins de gaspillage d'énergie. En outre, un tel dispositif permet un affichage plus lumineux de l'image 12 dans le champ de vision du conducteur.

On a représenté sur la figure 6 un exemple d'optique de projection pour le système de projection optique 44, adaptée pour afficher l'image virtuelle 12' au-delà du pare-brise 26. Cette optique de projection 52 est comporte par exemple entre dix et douze dioptres sphériques et au moins deux dioptres asphériques.

On a représenté sur cette figure 6 un premier sommet d'entrée E et un deuxième sommet de sortie S de l'optique 52, ainsi que son foyer principal image Fi, son foyer principal objet Fo, son plan principal image Hi, son plan principal objet Ho. On a également représenté la distance focale effective EFL, représentant la distance du foyer principal image Fi au plan principal image Hi, ou la distance du foyer principal objet Fo au plan principal objet Ho.

Cette optique présente par exemple les caractéristiques suivantes :
- un diamètre (distance entre les sommets E et S) *E̅S̅* = 160mm ;
- une distance focale effective *EFL* = 103*mm* ;
- une vergence V=9,7215 *m*⁻¹ ;
- une distance du premier sommet au plan principal objet *E̅H̅o̅* = 99.8mm ;
- une distance du premier sommet au foyer principal objet *E̅F̅o̅* = -3.2mm ;
- une distance du second sommet au plan principal image *S̅H̅i̅* =-6.6mm ;
- une distance du second sommet au foyer principal image *S̅F̅i̅* = 96.4mm.

L'écran à cristaux liquides 42 ou l'écran holographique 50 est alors agencé entre 0 mm et 3,2 mm en avant du premier sommet E, c'est-à-dire entre le premier sommet E et le foyer principal objet Fo.

Dans ce cas, la distance de projection de l'information est comprise entre 2,4 m et 4,1 m.

On notera que l'invention n'est pas limitée au mode de réalisation précédemment décrit, mais pourrait présenter diverses variantes sans sortie du cadre des revendications.

## Revendications

1. Dispositif (10) d'affichage tête haute, pour afficher au moins une image (12), destiné à équiper une cabine (16) de conduite d'un véhicule, notamment d'un véhicule ferroviaire, comportant des moyens (20) d'affichage de l'image (12) sur un écran transparent (26) dans une zone d'affichage (22), **caractérisé en ce qu'**il comporte un système opto-électronique de suivi (30), propre à détecter la position du conducteur (14) dans la cabine de conduite (16), les moyens d'affichage (20) étant propres à modifier la position de l'image (12) dans la zone d'affichage (22), en fonction de la position du conducteur (14), notamment de sa tête, détectée par le système opto électronique de suivi (30).

2. Dispositif d'affichage (10) selon la revendication 1, dans lequel le système de suivi (30) comporte au moins une caméra (32) destinée à être agencée dans la cabine (16) de façon à capturer en continu des images de cette cabine (16), et un dispositif (34) de traitement d'image destiné à déduire la position du conducteur (14), notamment de sa tête, à partir des images capturées par chaque caméra (32).

3. Dispositif d'affichage (10) selon la revendication 1 ou 2, dans lequel les moyens (20) d'affichage de l'image comportent un dispositif (24) de projection de l'image sur l'écran (26), vers lequel le dispositif de projection (24) projette des rayons lumineux (L), ces rayons lumineux (L) étant au moins en partie réfléchis par l'écran (26) vers le conducteur (14).

4. Dispositif d'affichage (10) selon l'une quelconque des revendications 1 à 3, dans lequel l'écran (26) est formé par un pare-brise de véhicule.

5. Dispositif d'affichage (10) selon l'une quelconque des revendications 1 à 4, dans lequel le dispositif de projection (24) est propre à générer une image virtuelle (12') au delà de l'écran (26) par rapport au conducteur (14).

6. Dispositif d'affichage (10) selon l'une quelconque des revendications 3 à 5, dans lequel le dispositif de projection d'image (24) comporte une source de lumière (40) et un écran à cristaux liquides (42), agencés de sorte que la lumière émise par la source (40) passe à travers l'écran à cristaux liquides (42), la zone d'affichage (22) correspondant à un affichage de l'écran à cristaux liquides (42), retransmise par un système de projection optique (44) sur l'écran d'affichage (26).

7. Dispositif d'affichage (10) selon la revendication 6, dans lequel les moyens d'affichage (20) modifient la position de l'image (12) en effectuant une modification de position sur l'affichage de l'écran à cristaux liquides (42).

8. Dispositif d'affichage (10) selon l'une quelconque des revendications 3 à 5, dans lequel le dispositif de projection d'image (24) comporte un projecteur laser (48) et un écran holographique (50), agencés de sorte que les lasers émis par le projecteur (48) passent à travers l'écran holographique (50).

9. Véhicule ferroviaire, comportant une cabine de conduite (16) comprenant un dispositif d'affichage (10) selon l'une quelconque des revendications précédentes.

## Patentansprüche

1. Headup-Anzeigevorrichtung (10) zum Anzeigen wenigstens eines Bilds (12), die vorgesehen ist zum Ausstatten einer Führerkabine (16) eines Fahrzeugs, insbesondere eines Schienenfahrzeugs, aufweisend Mittel (20) zum Anzeigen des Bilds (12) auf einem transparenten Schirm (26) in einer Anzeigezone (22), **dadurch gekennzeichnet, dass** sie aufweist ein optoelektronisches Folgesystem (30), das in der Lage ist, die Position des Fahrzeugführers (14) in der Führerkabine (16) zu detektieren, wobei die Anzeigemittel (20) in der Lage sind, die Position des Bilds (12) in der Anzeigezone (22) zu modifizieren in Abhängigkeit von der Position des Fahrzeugführers (14), insbesondere dessen Kopfs, die von dem optoelektronischen Folgesystem (30) detektiert wird.

2. Anzeigevorrichtung (10) gemäß Anspruch 1, wobei das Folgesystem (30) aufweist, wenigstens eine Kamera (32), die vorgesehen ist, um in der Kabine (16) in einer Weise eingerichtet zu sein, um fortlaufend Bilder von dieser Kabine (16) zu erfassen, und eine Vorrichtung (34) zur Bildverarbeitung, die vorgesehen ist, um die Position des Fahrzeugführers (14), insbesondere dessen Kopfs, zu ermitteln auf Basis der Bilder, die von jeder Kamera (32) erfasst werden.

3. Anzeigevorrichtung (10) gemäß Anspruch 1 oder 2, wobei die Mittel (20) zum Anzeigen des Bilds eine Vorrichtung (24) zum Projizieren des Bilds auf den Schirm (26) aufweisen, zu welchem hin die Projektionsvorrichtung (24) Lichtstrahlen (L) projiziert, wobei diese Lichtstrahlen (L) zumindest teilweise von dem Schirm (26) zu dem Fahrzeugführer (14) hin reflektiert werden.

4. Anzeigevorrichtung (10) gemäß irgendeinem der Ansprüche 1 bis 3, wobei der Schirm (26) gebildet ist von einer Fahrzeug-Windschutzscheibe.

5. Anzeigevorrichtung (10) gemäß irgendeinem der Ansprüche 1 bis 4, wobei die Projektionsvorrichtung (24) in der Lage ist, um ein bezüglich des Fahrzeugführers (14) über den Schirm (26) hinausgehend liegendes virtuelles Bild (12) zu erzeugen.

6. Anzeigevorrichtung (10) gemäß irgendeinem der Ansprüche 3 bis 5, wobei die Bildprojektionsvorrichtung (24) eine Lichtquelle (40) und einen Flüssigkristallbildschirm (42) aufweist, die derart eingerichtet sind, dass das von der Quelle (40) ausgestrahlte Licht den Flüssigkristallbildschirm (42) hindurch passiert, wobei die Anzeigezone (22) zu einer Anzeige des Flüssigkristallbildschirms (42) korrespondiert, die von einem optischen Projektionssystem (44) auf den Anzeigeschirm (26) übertragen wird.

7. Anzeigevorrichtung (10) gemäß Anspruch 6, wobei die Anzeigemittel (20) die Position des Bildes (12) modifizieren mittels Durchführens einer Modifizierung der Position auf der Anzeige des Flüssigkristallbildschirms (42).

8. Anzeigevorrichtung (10) gemäß irgendeinem der Ansprüche 3 bis 5, wobei die Bildprojektionsvorrichtung (24) aufweist einen Laserprojektor (48) und einen holografischen Schirm (50), die derart eingerichtet sind, dass die Laserstrahlen, die von dem Projektor (48) ausgestrahlt werden, durch den holografischen Schirm (50) hindurch passieren.

9. Schienenfahrzeug mit einer Führerkabine (16), welche eine Anzeigevorrichtung (10) gemäß irgendeinem der vorhergehenden Ansprüche aufweist.

## Claims

1. Head-up display device (10) for displaying at least one image (12), designed to equip a driver's cab (16) of a vehicle, in particular a railway vehicle, comprising means (20) for displaying the image (12) in a display area (22) on a transparent screen (26), **characterised in that** it comprises an optoelectronic monitoring system (30) suitable for detecting the position of the driver (14) in the driver's cab (16), the display means (20) being suitable for altering the position of the image (12) in the display area (22) according to the position of the driver (14), in particular his head, detected by the optoelectronic monitoring system (30).

2. Display device (10) according to claim 1, wherein the monitoring system (30) comprises at least one camera (32) intended to be positioned in the driver's cab (16) so as to continuously capture images of this cab (16) and an image processing device (34) for determining the position of the driver (14), in particular his head, on the basis of the images captured by each camera (32).

3. Display device (10) according to claim 1 or 2, wherein the image display means (20) comprises a device (24) for projecting the image onto the screen (26), towards which the projector device (24) projects light rays (L), at least some of these light rays (L) being reflected by the screen (26) towards the driver (14).

4. Display device (10) according to any one of claims 1 to 3, wherein the screen (26) is formed by a vehicle windscreen.

5. Display device (10) according to any one of claims 1 to 4, wherein the projector device (24) is suitable for generating a virtual image (12') beyond the screen (26) relative to the driver (14).

6. Display device (10) according to any one of claims 3 to 5, wherein the image projector device (24) comprises a light source (40) and a liquid crystal screen (42) arranged so that the light emitted by the source (40) passes through the liquid crystal screen (42), the display area (22) corresponding to a display of the liquid crystal screen (42) re-transmitted onto the display screen (26) by an optical projection system (44).

7. Display device (10) according to claim 6, wherein the display means (20) change the position of the image (12) by altering a position on the display of the liquid crystal screen (42).

8. Display device (10) according to any one of claims 3 to 5, wherein the image projector device (24) comprises a laser projector (48) and a holographic screen (50) arranged so that the lasers emitted by the projector (48) pass through the holographic screen (50).

9. Railway vehicle having a driver's cab (16) incorporating a display device (10) according to any one of the preceding claims.
